# EUROPEAN PATENT SPECIFICATION

(11) **EP 2 857 780 B1**
(45) Date of publication and mention of the grant of the patent: **15.05.2019**
(21) Application number: 14187367.9
(22) Date of filing: 01.10.2014
(51) Int. Cl.: F27B 9/02, F27B 9/30

(54) **Firing kiln for ceramic products and the like**
Brennofen für keramische Produkte und dergleichen
Four de cuisson de produits céramiques et analogue

(30) Priority: 01.10.2013 IT VR20130222
(43) Date of publication of application: 08.04.2015
(73) Proprietor: Siti - B&T Group S.p.A., 41043 Formigine (Modena) (IT)
(72) Inventor: Casoni, Ruggero, 41043 Formigine (Modena) (IT); Cantarelli, Lanfranco, 41043 Formigine (Modena) (IT); Caratti, Maurizio, 41043 Formigine (Modena) (IT)
(74) Representative: Feltrinelli, Secondo Andrea

(56) References cited:
- DE-A1- 3 042 708
- DE-A1- 3 117 828

## Description

### TECHNICAL FIELD OF THE INVENTION

The present invention concerns a firing kiln for ceramic products, and the like.

In particular, the present invention concerns a double-channel type firing kiln enabling hot air recovery and exchange between the two channels themselves, so as to allow for ideal firing of the products with a considerable reduction of energy consumption and subsequent benefits in terms of environmental impact.

### DESCRIPTION OF THE PRIOR ART

The sector of ceramic product production, as described in the document DE 30 42 708 A, and the like is known to use firing ovens of various types that can extend horizontally even for dozens of meters; inside the kiln a channel is defined for product feeding, and in the particular case of the so-called dual channel kilns, two channels are defined.

The channel is normally delimited by a lower wall or bottom, by two side walls and a top wall or crown, and in particular, in the case of dual channel kilns, an intermediate crown is provided separating two stacked channels.

The walls are made of or internally lined with heat-resistant refractory material.

The products to fire are fed to one channel inlet and conveyed to one respective outlet on conveyor means e.g. of the roller type, made of a material suitable for withstanding high temperatures.

The products to fire may be for example tiles, tableware, sanitaryware, bricks and the like.

On the kiln side walls are the burner outlets suitably arranged internally to create areas at different temperatures along the channel or channels, to ensure that the products being conveyed inside them are fired.

In particular, the following kiln areas are defined: a first preheating area of the products fed to the channel inlet, a second intermediate area of product firing at higher temperature, and a third end cooling area of the fired products which ends at the channel outlet.

In the design of the kilns, an increasingly important aspect taken into special consideration is that of energy consumption, both from the economic point of view because of the high cost of the fuel used to feed the burners, and from the environmental point of view due to the emission of greenhouse gases such as carbon dioxide.

Therefore the most recent kilns of known type feature technical measures that allow for the recovery of hot air to be sent to the burners as combustion air in order to reduce fuel consumption.

However, the energy saving obtainable with kilns of the known type is not entirely satisfactory, both for economic and for environmental impact considerations, and there are still margins of improvement for their efficiency.

### OBJECTS OF THE INVENTION

The technical aim of the present invention is therefore to develop a kiln for ceramic products, and the like, that allows for a further reduction of energy consumption and a reduction of emissions compared to the kilns of a known type.

Within this technical aim, a particular object of the present invention is to provide a kiln for ceramic products, and the like, simple to utilize and quick to use and maintain.

This aim and this object are achieved by the firing kiln for ceramic products, and the like, according to the appended claim 1.

The firing kiln according to the present invention, as described in independent claim 1, is of the type comprising at least one first channel and at least one second channel defined between the walls of the kiln itself, in addition it includes their respective first product feeding elements in at least the first channel and second product feeding elements in at least the second channel, and includes respective means of firing of the products themselves; the kiln also comprises means of exchange of hot air for sending predetermined flows of air between the respective areas of the first channel with areas of the second channel, for the recovery of hot air between areas at different temperatures, so as to allow the reduction of energy consumption and environmental impact.

The above means of exchange are suitable for transferring hot air from at least a first end cooling area of the first channel to at least a second preheating area of the second channel, and from at least a second end cooling area of the second channel to at least a first preheating area of the first channel.

The above means of exchange comprise a distribution of damper valves, provided with respective ports, suitable to collect and adjust in a unidirectional manner the flow of hot air from the first end cooling area to the second preheating area, and from the second end cooling area to the first preheating area.

Further advantageous characteristics are described in the dependent claims.

### BRIEF DESCRIPTION OF DRAWINGS.

The features of the invention will be better understood by any man skilled in the art from the following description and accompanying drawings, provided by way of non-limiting example, in which:
figure 1 is a schematic side view of the operations of the firing kiln for ceramic products, and the like, according to the present invention;

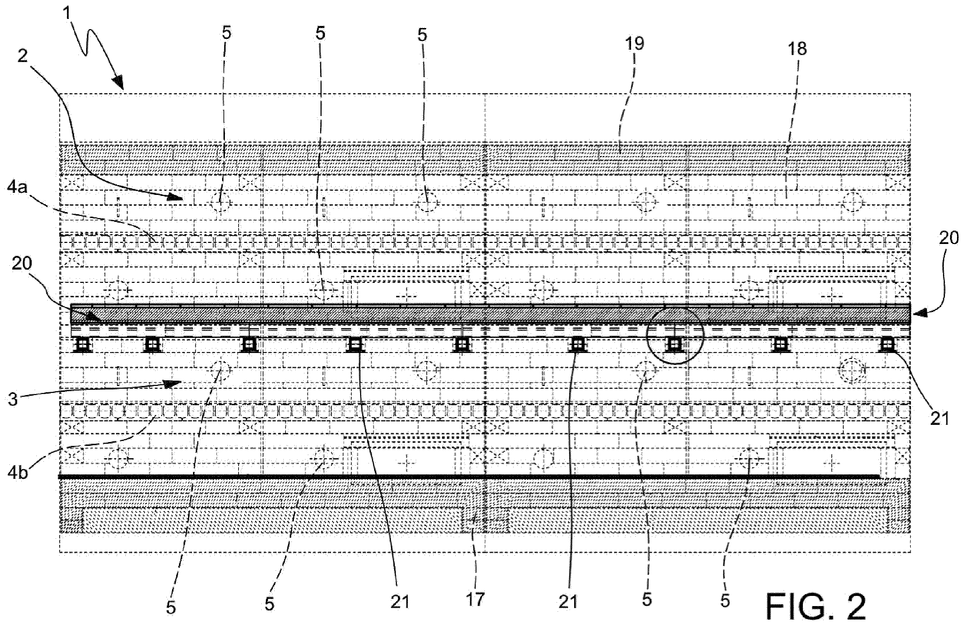

figure 2 is a longitudinal sectional view of a portion of the firing kiln for ceramic products, and the like, according to the present invention;

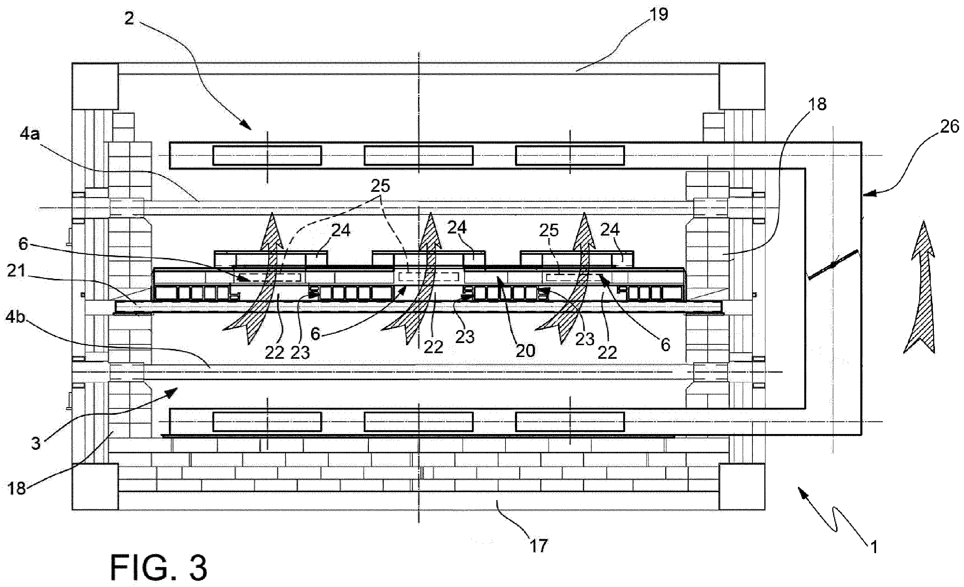

figure 3 is a cross section of the kiln highlighting means of exchange of hot air associated with an intermediate crown of the firing kiln for ceramic products, and the like, according to the present invention;

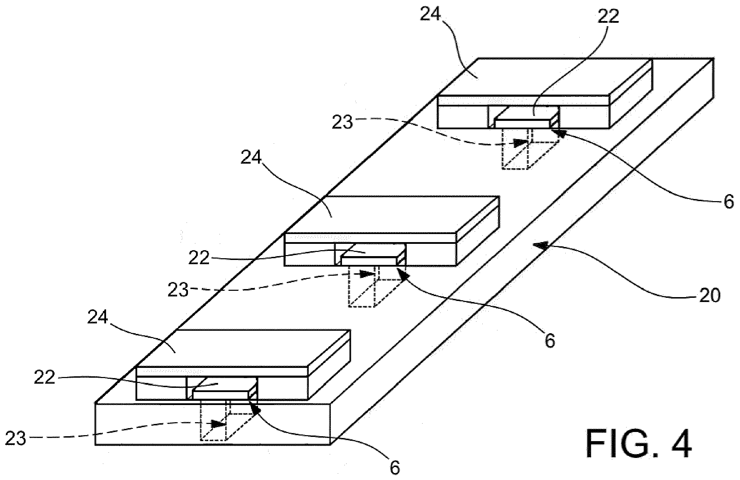

figure 4 is a perspective view of the means of exchange of hot air associated with an intermediate crown of the firing kiln for ceramic products, and the like, according to the present invention.

### EMBODIMENTS OF THE INVENTION.

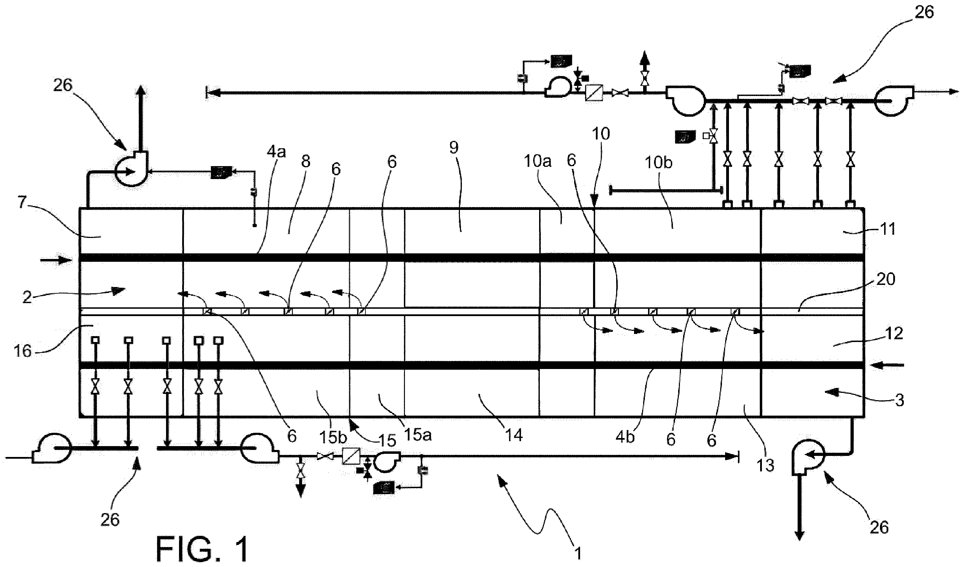

With reference to the accompanying figure 1, 1 is used to generally indicate a firing kiln for ceramic products, and the like, according to the present invention.

The firing kiln 1 for ceramic products, and the like, is of the type comprising at least a first channel 2 and at least a second channel 3 defined between the walls of the same kiln 1.

The kiln 1 also comprises respective first product feeding means 4a in at least the first channel 2; the kiln also comprises second product feeding means 4b in at least the second channel 3, and it comprises respective means of firing 5 of the same products.

The kiln 1 comprises means of exchange 6 of hot air for sending predetermined flows of air between respective areas of the first channel 2 with areas of the second channel 3, for the recovery of hot air between areas at different temperature so as to allow for reduced energy consumption and environmental impact.

The first channel 2 comprises at least a first inlet 7 for feeding the products, at least a first preheating area 8 for same, at least a proper first intermediate firing area 9, at least a first end cooling area 10, and a first outlet 11.

The second channel comprises at least a second inlet 12 for the products, at least a second preheating area 13 for same, at least a proper second intermediate firing area 14, at least a second end cooling area 15, and a second product outlet 16.

In particular, the above means of exchange 6 are suitable for carrying hot air in a unidirectional manner from at least a first end cooling area 10 of the first channel 2 to at least the second preheating area 13 of the second channel 3, and from at least the second end cooling area 15 of the second channel 3 to at least the first preheating area 8 of the first channel 2.

More in detail, the first channel 2 and the second channel 3 are stacked and defined between a lower wall or bottom 17, at least one side wall 18 and in particular between two side walls 18, one top wall or crown 19, and at least one intermediate separation crown 20.

On the side walls 18 internally are the burner outlets of the firing means 5 suitably arranged so as to create the said areas at different temperatures along the first channel 2 and the second channel 3, so as to ensure suitable product firing.

In particular, the intermediate crown 20 is supported on bars 21, for example silicon carbide bars, with the ends suitably associated with respective opposed slots of the side walls 18; the intermediate crown 20 can be multilayered with elements in refractory material, which may also be insulating, of different types.

The first inlet 7 and the first outlet 11 of the first channel 2 are arranged opposite to the second inlet 12 and to the second outlet 16 of the second channel 3, respectively, and the above mentioned respective first feeding means 4a and second feeding means 4b are suitable for conveying the products along the first channel 2 in the direction opposite to that of the products conveyed along the second channel 3.

The first feeding means 4a and second feeding means 4b are for example rollers, made from high temperature resistant material.

All the walls of kiln 1 are made from or lined with heat resistant refractory materials.

The above mentioned hot air means of exchange 6 are associated with the intermediate crown 20.

The first channel 2 and the second channel 3 are stacked with the first preheating area 8 located in an overhead position substantially at the second end cooling area 15, with the first intermediate firing area 9 located in an overhead position substantially at the second intermediate firing area 14, and with the end cooling area 10 located in an overhead position substantially at the second preheating area 13.

In particular, the means of exchange 6 are associated with the intermediate crown 20 at the separation sections of the first preheating area 8 from the second end cooling area 15, and of the first end cooling area 10 from the second preheating area 13.

More in detail, the means of exchange 6 comprise a distribution of damper valves 22 enabling to collect and adjust in a unidirectional manner the flow of hot air between areas of the first channel 2 and the second channel 3 at different temperatures, as described previously.

Such means of exchange 6 are adjustable to regulate the flow of hot air through respective controls accessible from the outside of the kiln 1 through appropriate hatches, and can be operated manually by the user.

More in detail, the damper valves 22 are suitable for regulating the flows of hot air in a unidirectional manner by means of the selective shutting off of respective ports 23 defined in the intermediate crown 20.

The intermediate crown 20 also comprises respective covering elements 24 located in an overhead position at each above mentioned port 23, to stop any firing residue falling into it.

Moreover, the kiln 1 comprises pumping means 25 to facilitate the exchange of hot air between areas of the first channel 2 and of the second channel 3 through said means of exchange 6 and in the manners previously described.

In particular, the pumping means 25 enable to send hot air in a unidirectional manner at least from the first end cooling area 10 to the second preheating area 13, and from the second end cooling area 15 to the first preheating area 8.

These pumping means 25 are for example of the ducting type associated with respective fans/compressors and air flow control valves.

The kiln 1 comprises recovery means to collect hot air from areas of the first channel 2 and of the second channel 3 and conveying same as combustion air to the burners of the firing means 5, so as to reduce the fuel consumption.

In particular, the hot air collected from areas of the first channel 2 is sent to respective burners of the second channel 3, and the hot air collected from areas of the second channel 3 is sent to respective burners of the first channel 2.

The kiln 1 is provided with means of controlled circulation 26 of the air and exhaust gases comprising a suitable distribution of pipes, flues, variable speed fans, for example with an electric motor driven by an inverter, shutoff valves and sensors for the control of pressure and temperature interfaced to at least one control processor.

In another version of the kiln 1, the first channel 2 and the second channel 3 may be side by side and defined between at least one lower wall or bottom 17, two side walls 18, at least one upper wall or crown 19 and at least one intermediate partition vertical wall, said means of exchange 6 of hot air being associated at least with said intermediate vertical wall. This version is not shown in the figures.

The operation of the firing kiln 1 for ceramic products, and the like, according to the invention is, as described, completely intuitive.

The products are fed to the first inlet 7 and to the second inlet 12 and through the rollers of the first feeding means 4a and of the second feeding means 4b they are conveyed in opposite directions respectively along at least the first preheating area 8, the first intermediate firing area 9 and the first end cooling area 10 to the first outlet 11 of the first channel 2, and along at least the second preheating area 13, the second intermediate firing area 14 and the second end cooling area to the second outlet 16 of the second channel 3.

Along the first channel 2 and the second channel 3 different types of product requiring different firing can be fed and fired, as the temperatures of the areas of the first channel 2 and of the second channel 3 can be independently set and adjusted, according to the firing requirements of the processed products.

The means of exchange 6 located at the sections of the intermediate crown 20 that separate the first preheating area 8 from the second end cooling area 15, and the first end cooling area 10 from the second preheating area 13, allow for the recovery and the sending of hot air from higher to lower temperature/pressure areas, also thanks to the use of the above mentioned pumping means 25.

The flow of hot air is adjusted as judged fitting by the user via the provided controls accessible from the outside of the kiln 1, which allow for the selective adjustment of the opening of the damper valves 22 of the means of exchange 6.

Such recovery of hot air enables to use less fuel for heating the areas of the first channel 2 and of the second channel 3 where it is directed, with obvious economic and energy savings also from an environmental point of view. To reduce the consumption of fuel, the kiln 1 comprises also the recovery means that collect hot air from the first cooling area 10 and from the second cooling area 15 to send it as combustion air to the burners of the second channel 2 and the first channel 3 - respectively. The invention, thus conceived, enables to ensure important technical advantages.

An important technical advantage is the fact that the firing kiln 1 for ceramic products, and the like, thanks to the recovery of hot air between the areas of the first channel 2 and of the second channel 3, allows for a considerable saving of fuel and consequently a further reduction of costs and energy consumption compared to the kilns of a known type.

Between the areas of the first channel 2 and the second channel 3 concerned by the means of exchange 6 there is no free circulation of air, which would lead said areas to reach the same temperature, but a very precisely adjustable unidirectional flow of hot air from the end cooling areas 10,15 to the preheating areas 8,13.

In fact, the primary goal of the present solution is to obtain an effective cooling of the products in the end cooling areas 10,15 recovering heat to send it to the corresponding preheating areas 8,13.

Moreover, the kiln 1 according to the present invention enables to reduce the emissions, with advantages also from an environmental point of view.

The damper valves 22 may be more concentrated - that is spaced out at smaller intervals - in some parts of the intermediate crown 20 compared to others, to make the most of the temperature of the hot air to be conveyed to the preheating areas 8,13.

In the embodiment represented in the figures, the damper valves 22 are mainly concentrated - with reference to the feeding direction of the products in the first channel 2 and in the second channel 3 - at the start of the first end cooling area 10 and the second end cooling area 15: in fact, at such initial portions, the air temperature is higher, and therefore the removal of hot air from these areas provides the best results in terms of recovery of heat.

It has thus been seen how the invention achieves the intended purposes.

## Claims

1. A firing kiln for ceramic products, and the like, comprising at least a first channel (2) and at least a second channel (3) defined between walls of said kiln (1), respective first feeding means (4a) of the products in at least said first channel (2) and second feeding means (4b) of the products in at least said second channel (3), respective firing means (5) of the same products, means of exchange (6) of hot air for directing predetermined air flows between the respective areas of the first channel (2) with areas of the second channel (3), for the recovery of hot air between areas at different temperature so as to allow the reduction of energy consumption and emissions, wherein said means of exchange (6) are suitable for transferring hot air at least from a first end cooling area (10) of said first channel (2) to at least a second preheating area (13) of said second channel (3), and at least from one second end cooling area (15) of said second channel (3) to at least a first preheating area (8) of said first channel (2), **characterised in that** said means of exchange (6) comprise a distribution of damper valves (22), provided with respective ports (23), suitable to collect and adjust in an unidirectional manner the flow of hot air from said first end cooling area (10) to said second preheating area (13), and from said second end cooling area (15) to said first preheating area (8), wherein between the areas of said first channel (2) and of said second channel (3) concerned by said means of exchange (6) the free circulation of air is avoided, which would lead said areas to reach the same temperature, and an adjustable unidirectional flow of hot air from said end cooling areas (10, 15) to said respective preheating areas (8, 13) is enabled.

2. A kiln according to claim 1, wherein said at least first channel (2) and said at least second channel (3) are stacked and defined between at least one lower wall or bottom (17), at least one side wall (18), at least one upper wall or crown (19), and at least one intermediate partition crown (20), a first inlet (7) and a first outlet (11) of said first channel (2) being disposed respectively opposite to a second inlet (12) and to a second outlet (16) of said second channel (3), said respective first feeding means (4a) and second feeding means (4b) being designed to feed the products along said first channel (2) in an opposite direction to that of products fed in said second channel (3).

3. A kiln according to claim 2, wherein said exchange means (6) of hot air are associated to at least said intermediate crown (20).

4. A kiln according to one of the preceding claims, in which said first channel (2) and said second channel (3) are stacked with said first preheating area (8) located in an overhead position substantially at said second end cooling area (15), with at least a first intermediate firing area (9) of said first channel (2) located in an overhead position substantially at at least a second intermediate firing area (14) of said second channel (3), and with said first end cooling area (10) located in an overhead position substantially at said second preheating area (13).

5. A kiln according to one of claims 2-4, wherein said means of exchange (6) are associated with said intermediate crown (20) at least at the separation sections of said first preheating area (8) from said second end cooling area (15), and of said first end cooling area (10) from said second preheating area (13).

6. A kiln according to any preceding claim, wherein said means of exchange (6) are adjustable to regulate the flows of hot air through respective controls located outside of the kiln (1) and manually controllable by a user.

7. A kiln according to one of claims 2-6, wherein said damper valves (22) are suitable to regulate the flows of hot air through the selective shutting off of the ports (23) defined in said intermediate crown (20).

8. A kiln according to one of claims 2-7, wherein said intermediate crown (20) comprises respective cover elements (24) located in an overhead position at each one of said ports (23).

9. A kiln according to one of the preceding claims, comprising pumping means (25) to facilitate the exchange of hot air between areas of said first channel (2) and of said second channel (3) through said means of exchange (6).

10. A kiln according to one of the preceding claims, in which said damper valves (22) are more densely concentrated, with reference to the feeding direction of the products in said first channel (2) and in said second channel (3), at the initial sections of said first end cooling area (10) and said second end cooling area (15), where air temperature is higher.

11. A kiln according to one of the preceding claims, comprising recovery means to collect hot air from areas of said first channel (2) and of said second channel (3) and convey the same as combustion air to the burners of said firing means (5) of said second channel (3) and to the burners of said firing means (5) of said first channel (2), respectively, so as to reduce fuel consumption.

12. A kiln according to claim 1, wherein said first channel (2) and said second channel (3) are side by side and defined between at least one lower wall or bottom (17), two side walls (18), at least one upper wall or crown (19) and at least one intermediate partition vertical wall, said means of exchange (6) of hot air being associated at least with said intermediate vertical wall.

## Patentansprüche

1. Brennofen für keramische Produkte und dergleichen, umfassend mindestens einen ersten Kanal (2) und mindestens einen zweiten Kanal (3), der zwischen den Wänden des besagten Ofens (1) definiert ist, jeweilige erste Zuführmittel (4a) der Produkte in mindestens den besagten ersten Kanal (2) und zweite Zuführmittel (4b) der Produkte in mindestens den besagten zweiten Kanal (3), jeweilige Brennmittel (5) derselben Produkte, Austauschmittel (6) von Heißluft zum Leiten von vorbestimmten Luftströmen zwischen den jeweiligen Bereichen des ersten Kanals (2) und Bereichen des zweiten Kanals (3), für die Rückgewinnung von Heißluft zwischen Bereichen mit unterschiedlicher Temperatur, um die Reduzierung des Energieverbrauchs und Emissionen zu ermöglichen, wobei die besagten Austauschmittel (6) zur Übertragung von Heißluft mindestens von einem ersten Endkühlbereich (10) des besagten ersten Kanals (2) zu mindestens einem zweiten Vorwärmbereich (13) des besagten zweiten Kanals (3), und mindestens von einem zweiten Endkühlbereich (15) des besagten zweiten Kanals (3) zu mindestens einem ersten Vorwärmbereich (8) des besagten ersten Kanals (2) geeignet sind, **dadurch gekennzeichnet, dass** die besagten Austauschmittel (6) eine Verteilung von Klappen (22) umfassen, die mit jeweiligen Öffnungen (23) versehen sind, die geeignet sind, den Heißluftstrom von dem besagten ersten Endkühlbereich (10) zu dem besagten zweiten Vorwärmbereich (13) und von dem besagten zweiten Endkühlbereich (15) zu dem besagten ersten Vorwärmbereich (8) unidirektional zu sammeln und anzupassen, wobei zwischen den Bereichen des besagten ersten Kanals (2) und des besagten zweiten Kanals (3), die von den besagten Austauschmitteln (6) betroffen sind, die freie Luftzirkulation vermieden wird, was dazu führen würde, dass die besagten Bereiche die gleiche Temperatur erreichen, und dass ein einstellbarer unidirektionaler Heißluftstrom von den besagten Endkühlbereichen (10, 15) zu den jeweiligen Vorwärmbereichen (8, 13) aktiviert ist.

2. Ofen nach Anspruch 1, worin der besagte mindestens erste Kanal (2) und der besagte mindestens zweite Kanal (3) gestapelt und definiert sind zwischen mindestens einer unteren Wand oder einem Boden (17), mindestens einer Seitenwand (18), mindestens einer oberen Wand oder Decke (19) und mindestens einer Zwischenwanddecke (20), einem ersten Einlass (7) und einem ersten Auslass (11) des besagten ersten Kanals (2), die jeweils gegenüber einem zweiten Einlass (12) und einem zweiten Auslass (16) des besagten zweiten Kanals (3) angeordnet sind, wobei die jeweiligen ersten Zuführmittel (4a) und zweiten Zuführmittel (4b) ausgebildet sind, um die Produkte entlang des besagten ersten Kanals (2) in einer entgegengesetzten Richtung zu derjenigen der Produkte, die dem besagten zweiten Kanal (3) zugeführt werden, zuzuführen.

3. Ofen nach Anspruch 2, worin die besagten Austauschmittel (6) der Heißluft mindestens der besagten Zwischendecke (20) zugeordnet sind.

4. Ofen nach einem der vorangegangenen Ansprüche, bei dem der besagte erste Kanal (2) und der besagte zweite Kanal (3) mit dem besagten ersten Vorwärmbereich (8) gestapelt sind, der sich in einer Überkopfposition im Wesentlichen in Nähe von dem besagten zweiten Endkühlbereich (15) befindet, mit mindestens einem ersten Zwischenbrennbereich (9) des besagten ersten Kanals (2), der sich in einer Überkopfposition im Wesentlichen in Nähe von mindestens einem zweiten Zwischenbrennbereich (14) des besagten zweiten Kanals (3) befindet, und mit dem besagten ersten Endkühlbereich (10), der sich in einer Überkopfposition im Wesentlichen in Nähe von dem besagten zweiten Vorwärmbereich (13) befindet.

5. Ofen nach einem der Ansprüche 2-4, worin die besagten Austauschmittel (6) der besagten Zwischendecke (20) mindestens in Nähe von den Trennungsabschnitten des besagten ersten Vorwärmbereichs (8) von dem besagten zweiten Endkühlbereich (15) und des besagten ersten Endkühlbereichs (10) von dem besagten zweiten Vorwärmbereichs (13) zugeordnet sind.

6. Ofen nach irgendeinem vorhergehenden Anspruch, worin die besagten Austauschmittel (6) einstellbar sind, um die Ströme von Heißluft durch entsprechende Steuerungen zu regeln, die außerhalb des Ofens (1) angeordnet und von einem Benutzer manuell steuerbar sind.

7. Ofen nach einem der Ansprüche 2-6, worin die besagten Klappen (22) geeignet sind, die Ströme von Heißluft durch das selektive Absperren der in der besagten Zwischendecke (20) definierten Öffnungen (23) zu regeln.

8. Ofen nach einem der Ansprüche 2-7, worin die besagte Zwischendecke (20) jeweilige Abdeckelemente (24) umfasst, die in einer Überkopfposition in Nähe von jeder der besagten Öffnungen (23) angeordnet sind.

9. Ofen nach einem der vorangegangenen Ansprüche, umfassend Pumpmittel (25), um den Austausch von Heißluft zwischen Bereichen des besagten ersten Kanals (2) und des besagten zweiten Kanals (3) durch die besagten Austauschmittel (6) zu erleichtern.

10. Ofen nach einem der vorangegangenen Ansprüche, in dem die besagten Klappen (22) dichter konzentriert sind in Bezug auf die Zuführrichtung der Produkte in den besagten ersten Kanal (2) und in den besagten zweiten Kanal (3) in Nähe von den Anfangsabschnitten des besagten ersten Endkühlbereichs (10) und des besagten zweiten Endkühlbereichs (15), wo die Lufttemperatur höher ist.

11. Ofen nach einem der vorangegangenen Ansprüche, umfassend Rückgewinnungsmittel zum Sammeln von Heißluft aus Bereichen des besagten ersten Kanals (2) und des besagten zweiten Kanals (3) und zum Fördern derselben als Verbrennungsluft zu den jeweiligen Brennern der besagten Brennmittel (5) des besagten zweiten Kanals (3) und zu den Brennern der besagten Brennmittel (5) des besagten ersten Kanals (2), um den Brennstoffverbrauch zu reduzieren.

12. Ofen nach Anspruch 1, worin der besagte erste Kanal (2) und der besagte zweite Kanal (3) nebeneinander liegen und zwischen mindestens einer unteren Wand oder einem Boden (17), zwei Seitenwänden (18), mindestens einer oberen Wand oder Decke (19) und mindestens einer vertikalen Zwischenwand definiert sind, wobei die besagten Austauschmittel (6) der Heißluft mindestens der besagten vertikalen Zwischenwand zugeordnet sind.

## Revendications

1. Four de cuisson pour des produits céramiques, et analogues, comprenant au moins un premier canal (2) et au moins un deuxième canal (3) définis entre des parois dudit four (1), des premiers moyens d'alimentation (4a) respectifs des produits dans au moins ledit premier canal (2) et des deuxièmes moyens d'alimentation (4b) des produits dans au moins ledit deuxième canal (3), des moyens de cuisson (5) respectifs desdits produits, des moyens d'échange (6) d'air chaud pour diriger des flux d'air prédéterminés entre les zones respectives du premier canal (2) et les zones du deuxième canal (3), pour la récupération d'air chaud entre les zones à des températures différentes de façon à permettre la réduction de la consommation d'énergie et des émissions, dans lequel lesdits moyens d'échange (6) sont adaptés pour transférer l'air chaud au moins d'une première zone de refroidissement final (10) dudit premier canal (2) à au moins une deuxième zone de préchauffage (13) dudit deuxième canal (3), et au moins d'une deuxième zone de refroidissement final (15) dudit deuxième canal (3) à au moins une première zone de préchauffage (8) dudit premier canal (2), **caractérisé en ce que** lesdits moyens d'échange (6) comprennent une distribution de clapets amortisseurs (22), dotés d'orifices (23) respectifs, adaptés pour collecter et ajuster de manière unidirectionnelle le flux d'air chaud de ladite première zone de refroidissement final (10) à ladite deuxième zone de préchauffage (13), et de ladite deuxième zone de refroidissement final (15) à ladite première zone de préchauffage (8), dans lequel entre les zones dudit premier canal (2) et dudit deuxième canal (3) concernées par lesdits moyens d'échange (6) la circulation libre d'air est évitée, laquelle conduirait lesdites zones à atteindre la même température, et un flux unidirectionnel ajustable d'air chaud desdites zones de refroidissement final (10, 15) auxdites zones de préchauffage (8, 13) respectives est permis.

2. Four selon la revendication 1, dans lequel ledit au moins un premier canal (2) et ledit au moins un deuxième canal (3) sont empilés et définis entre au moins une paroi inférieure ou fond (17), au moins une paroi latérale (18), au moins une paroi supérieure ou couronne (19), et au moins une couronne de séparation intermédiaire (20), une première entrée (7) et une première sortie (11) dudit premier canal (2) étant disposées respectivement à l'opposé d'une deuxième entrée (12) et d'une deuxième sortie (16) dudit deuxième canal (3), lesdits premiers moyens d'alimentation (4a) et deuxièmes moyens d'alimentation (4b) respectifs étant conçus pour alimenter les produits le long dudit premier canal (2) dans une direction opposée à celle des produits alimentés dans ledit deuxième canal (3).

3. Four selon la revendication 2, dans lequel lesdits moyens d'échange (6) d'air chaud sont associés à au moins ladite couronne intermédiaire (20).

4. Four selon l'une des revendications précédentes, dans lequel ledit premier canal (2) et ledit deuxième canal (3) sont empilés avec ladite première zone de préchauffage (8) située dans une position suspendue sensiblement au niveau de ladite deuxième zone de refroidissement final (15), avec au moins une première zone de cuisson intermédiaire (9) dudit premier canal (2) située dans une position suspendue sensiblement au niveau d'au moins une deuxième zone de cuisson intermédiaire (14) dudit deuxième canal (3), et avec ladite première zone de refroidissement final (10) située dans une position suspendue sensiblement au niveau de ladite deuxième zone de préchauffage (13).

5. Four selon l'une des revendications 2 à 4, dans lequel lesdits moyens d'échange (6) sont associés à ladite couronne intermédiaire (20) au moins au niveau des sections de séparation de ladite première zone de préchauffage (8) de ladite deuxième zone de refroidissement finale (15), et de ladite première zone de refroidissement final (10) de ladite deuxième zone de préchauffage (13).

6. Four selon l'une des revendications précédentes, dans lequel lesdits moyens d'échange (6) sont ajustables pour réguler les flux d'air chaud à travers des commandes respectives situées en dehors du four (1) et contrôlables manuellement par un utilisateur.

7. Four selon l'une des revendications 2 à 6, dans lequel lesdits clapets amortisseurs (22) sont adaptés pour réguler les flux d'air chaud grâce à la fermeture sélective des orifices (23) définis dans ladite couronne intermédiaire (20).

8. Four selon l'une des revendications 2 à 7, dans lequel ladite couronne intermédiaire (20) comprend des éléments de couverture (24) respectifs situés dans une position suspendue au niveau de chacun desdits orifices (23) .

9. Four selon l'une des revendications précédentes, comprenant des moyens de pompage (25) pour faciliter l'échange d'air chaud entre les zones dudit premier canal (2) et dudit deuxième canal (3) grâce auxdits moyens d'échange (6).

10. Four selon l'une des revendications précédentes, dans lequel lesdits clapets amortisseurs (22) sont concentrés plus densément, en référence à la direction d'alimentation des produits dans ledit premier canal (2) et dans ledit deuxième canal (3), au niveau des sections initiales de ladite première zone de refroidissement final (10) et de ladite deuxième zone de refroidissement final (15), où la température de l'air est plus élevée.

11. Four selon l'une des revendications précédentes, comprenant des moyens de récupération pour collecter l'air chaud des zones dudit premier canal (2) et dudit deuxième canal (3) et le transporter comme air de combustion vers les brûleurs desdits moyens de cuisson (5) dudit deuxième canal (3) et vers les brûleurs desdits moyens de cuisson (5) dudit premier canal (2), respectivement, de façon à réduire la consommation de carburant.

12. Four selon la revendication 1, dans lequel ledit premier canal (2) et ledit deuxième canal (3) sont côte à côte et définis entre au moins une paroi inférieure ou fond (17), deux parois latérales (18), au moins une paroi supérieure ou couronne (19) et au moins une paroi verticale de séparation intermédiaire, lesdits moyens d'échange (6) d'air chaud étant associés au moins avec ladite paroi verticale intermédiaire.
